# EUROPÄISCHE PATENTANMELDUNG

(11) **EP 1 887 077 A1**
(43) Veröffentlichungstag der Anmeldung: **13.02.2008**
(21) Anmeldenummer: 06016634.5
(22) Anmeldetag: 09.08.2006
(51) Int. Cl.: C11C 5/02

(54) **Kühlvorrichtung und zugehöriges Verfahren**

(71) Anmelder: HB-Feinmechanik GmbH & Co.KG, 94526 Metten (DE)
(72) Erfinder: Ruhland, Georg, 94428 Eichendorf (DE)
(74) Vertreter: Wunderlich, Rainer

(57) **Zusammenfassung**

Die Erfindung betrifft eine Kühlvorrichtung und ein diesbezügliches Kühlverfahren, wobei zwei Kühlwalzen im Wesentlichen parallel zueinander angeordnet sind. Weiter sind eine Zuführeinrichtung zum Aufbringen eines zu kühlenden Materials auf die Kühlwalzen und eine Abnahmeeinrichtung zum Entfernen des gekühlten Materials von den Kühlwalzen vorgesehen. Erfindungsgemäß ist zwischen den zwei Kühlwalzen ein Aufnahmeraum gebildet, in welchen das zu kühlende Material durch die Zuführeinrichtung eingeleitet wird.

## Beschreibung

Die Erfindung betrifft eine Kühlvorrichtung mit zwei Kühlwalzen, welche im Wesentlichen parallel zueinander angeordnet sind, einer Zuführeinrichtung zum Aufnehmen eines zu kühlenden fließfähigen Materials auf die Kühlwalzen und mindestens einer Abnahmeeinrichtung zum Entfernen des gekühlten Materials von den Kühlwalzen.

Weiterhin betrifft die Erfindung ein Verfahren zum Behandeln eines zu kühlenden Materials.

Aus der DE-A-1 950 817 ist ein Verfahren und eine Vorrichtung zum Extrudieren von Kerzen bekannt, bei welchen der Kerzenrohstoff vor einer Extrusion mittels eines trommelförmigen Kühlers gekühlt und verfestigt wird. Hierzu ragt eine Kühlwalze in ein Becken mit flüssigem Kerzenrohstoff hinein. Durch Rotation der Kühlwalze lagert sich der flüssige Kerzenrohstoff an der Außenwand der Kühlwalze an und wird zu einer Extrusionseinrichtung gefördert.

Ein ähnliches Verfahren zur Kerzenherstellung unter Verwendung eines Trommelkühlers ist auch aus der US-A-2,754,543 bekannt. Dabei taucht ebenfalls eine Kühlwalze in ein Becken mit flüssigem Kerzenrohstoff teilweise ein.

Bei Produktionsunterbrechungen können bei diesen bekannten Kühlvorrichtungen Probleme auftreten. Zum einen ist es erforderlich, das Becken mit dem flüssigen Kerzenrohstoff weiter zu beheizen, so dass sich der Kerzenrohstoff in dem Becken nicht verfestigt. Zudem führt eine Unterbrechung der kontinuierlichen Drehbewegung der Walze dazu, dass der Förderdruck in der Extrusionsvorrichtung unterbrochen und der gesamte Wärmehaushalt innerhalb der Extrusionsvorrichtung gestört wird. Im Fall einer Produktionsunterbrechung kann daher ein aufwändiges Demontieren und Reinigen der Kühlvorrichtung sowie der nachfolgenden Extrusionseinrichtung von dem erstarrten Kerzenrohstoff notwendig sein.

Ähnliche Probleme treten bei einem Produktwechsel auf, etwa, wenn Material oder Farbe des Kerzenrohstoffs zu ändern sind.

Eine gattungsgemäße Kühlvorrichtung ist aus der US-A-3,531,550 bekannt. Hierbei sind insgesamt drei Kühlwalzen parallel zueinander angeordnet, wobei eine erste Kühlwalze zum Aufnehmen des zu kühlenden Materials in ein Aufnahmebecken teilweise eintaucht. Durch entsprechende Anordnung der mehreren Walzen wird der verfestigte Materialfilm mäanderförmig um die einzelnen Walzen geleitet, so dass auch bei einem kleinen Walzendurchmesser eine hohe Kühlleistung erzielt wird. Die möglichen Probleme bei einer Produktionsunterbrechung oder einem Produktwechsel bleiben jedoch bestehen.

Der Erfindung liegt die **Aufgabe** zugrunde, eine Kühlvorrichtung und ein Verfahren zur Kühlung anzugeben, welche eine hohe Kühlleistung und einen schnellen und effizienten Wechsel des zu kühlenden Materials erlauben.

Die Aufgabe wird zum einen durch eine Kühlvorrichtung mit den Merkmalen des Anspruchs 1 und zum anderen durch ein Verfahren mit den Merkmalen des Anspruchs 8 gelöst. Bevorzugte Ausführungsformen sind in den jeweils abhängigen Ansprüchen angegeben.

Die erfindungsgemäße Kühlvorrichtung ist dadurch gekennzeichnet, dass zwischen den zwei Kühlwalzen ein Aufnahmeraum für das zu kühlende fließfähige Material gebildet ist und dass durch die Zuführeinrichtung das zu kühlende fließfähige Material in den Aufnahmeraum einleitbar ist.

Ein Grundgedanke der Erfindung kann darin gesehen werden, das zu kühlende Material unmittelbar zwischen zwei Kühlwalzen einzubringen. Es ist somit kein Becken für das fließfähige zu kühlende Material vorzusehen. Vielmehr wird ein Aufnahmeraum seitlich durch die Wandungen von zwei parallelen Kühlwalzen begrenzt. Die Wandungen der beiden Walzen können sich entlang einer Linie berühren oder durch einen definierten Spalt voneinander beabstandet sein. Der Spalt ist dabei vorzugsweise so gewählt, dass aufgrund der Rotation der Kühlwalzen und/oder der Fließeigenschaften des Materials dieses nicht unkontrolliert zwischen den Walzen hindurchströmen kann. Durch die Anordnung von zwei Kühlwalzen wird gleichzeitig eine hohe Kühlleistung erzielt.

Die stirnseitigen Begrenzungen des Aufnahmeraums können durch einfach zu reinigende Stirnplatten gebildet sein oder bei entsprechender Länge der Kühlwalzen frei bleiben.

Aufgrund dieser Anordnung kann etwa bei einem Produktwechsel die Kühlvorrichtung in einfacher Weise leergefahren werden. Es ist einfach die Zufuhr von weiterem fließfähigen Material in den Aufnahmeraum zu stoppen, wobei die Walzen nur so lange weiter in Betrieb sein müssen, bis der Aufnahmeraum völlig entleert ist. Dies vermindert den Arbeitsaufwand und spart Energie- und Arbeitskosten.

Eine bevorzugte Ausführungsform der Erfindung besteht darin, dass die zwei Kühlwalzen in entgegengesetzter Richtung angetrieben sind, wobei das zu kühlende Material durch die Kühlwalzen aus dem Arbeitsraum nach oben abführbar ist. Hierdurch können die Walzen mit einem Spalt zueinander beabstandet sein, wobei aufgrund der Drehrichtung der Kühlwalzen dennoch sichergestellt ist, dass kein Material durch den Spalt nach unten aus dem Aufnahmeraum heraus fließt.

Eine besonders hohe Kühlleistung wird nach der Erfindung dadurch erzielt, dass die Kühlwalzen von einem Kühlmittel durchströmt sind. Das Kühlmittel wird mit einer separaten Kühleinheit im Kreislauf auf einer gewünschten Kühltemperatur gehalten.

Grundsätzlich ist es möglich, an den beiden Kühlwalzen jeweils eine separate Abnahmeeinrichtung vorzusehen, mit welchen das jeweils erstarrte oder teilweise erstarrte und noch weiche Material von der Wandung der Kühlwalzen separat abgenommen wird. Besonders bevorzugt ist es jedoch nach der Erfindung, dass die Abnahmeeinrichtung mittig zwischen den zwei Kühlwalzen unterhalb des Aufnahmeraumes angeordnet ist und das gekühlte Material von beiden Kühlwalzen durch die Abnahmeeinrichtung abstreifbar ist. Durch diese zentrale Abnahmeeinrichtung wird eine kompakte Anordnung erreicht und es wird eine einfache Weitertransportierbarkeit des gekühlten Materials sichergestellt.

Eine zuverlässige Abnahme der gekühlten Materialschicht von der Kühlwalze wird erfindungsgemäß dadurch erreicht, dass die Abnahmeeinrichtung mindestens eine Rakel aufweist, welche federvorgespannt an mindestens einer Kühlwalze anliegt.

Alternativ oder ergänzend dazu kann es erfindungsgemäß vorgesehen sein, dass die Abnahmeeinrichtung mindestens eine profilierte Walze aufweist, welche in das an der Kühlwalze haftende Material einschneidet. Das Profil der Walze ist dabei so gestaltet, dass keine durchgehende Materialschicht von der Kühlwalze abgerakelt wird, sondern aufgrund der durchgeführten Einschnitte Materialbrocken von der Kühlwalze abfallen. Diese einzelnen Materialbrocken sind leichter in einem nachfolgenden Bearbeitungsschritt zu behandeln.

Eine Verwendung der erfindungsgemäßen Kühlvorrichtung zur Fasentrennung ergibt sich nach der Erfindung dadurch, dass am Aufnahmeraum eine Austrittseinrichtung für einen noch fließfähigen Bestandteil des noch zu kühlenden Materials vorgesehen ist. So kann das zu kühlende Material ein Gemisch aus zwei Stoffen mit unterschiedlichem Schmelz- oder Kristallisationspunkt sein. Dabei ist die Kühltemperatur der Kühlwalzen so eingestellt, dass sich ein erster Bestandteil des Gemisches bereits an der Kühlwalze verfestigt, während der andere Bestandteil bei dieser Kühltemperatur noch fließfähig bleibt. Aufgrund des unterschiedlichen Schmelzpunktes kann so eine Fasentrennung mit der erfindungsgemäßen Kühlvorrichtung erfolgen. Die Austrittseinrichtungen können Absaugrohre oder Abflusskanäle sein. Ein derartiger Abflusskanal kann beispielsweise an einem Kopfende der Walzen im Bereich des Aufnahmeraumes vorgesehen sein, wenn die Drehachsen der Walzen gekippt angeordnet sind. Hierdurch würde ein schräg verlaufender Aufnahmeraum gebildet werden, an dessen untersten Ende ein Ablaufkanal oder eine Absaugeinrichtung vorgesehen sein kann.

Weiter ist es nach der Erfindung vorteilhaft, dass eine Extrusionsanlage mit einem Extruder, insbesondere einem Doppelwellenextruder, und einer Kühlvorrichtung vorgesehen ist, welche dem Extruder zum Vorkühlen des zu extrudierenden Materials vorgeschaltet ist, wobei die erfindungsgemäße Kühlvorrichtung zum Einsatz kommt. Insbesondere kann diese Extrusionsanlage bei der Extrusion von Kerzenmaterial verwendet werden, wobei beim Fasensprung von flüssig zu fest eine besonders hohe Kühlleistung aufzubringen ist. Diese kann in hervorragender Weise durch die erfindungsgemäße Kühlvorrichtung bewirkt werden.

Die eingangs genannte Aufgabe wird zum anderen durch ein Verfahren zum Behandeln eines Materials gelöst, welches dadurch gekennzeichnet ist, dass das Material durch eine Kühlvorrichtung nach einem der Ansprüche 1 bis 9 gekühlt wird. In entsprechender Weise ergeben sich bei dem Verfahren die vorgenannten Vorteile hinsichtlich einer hohen Kühlleistung und der einfachen, unaufwändigen Möglichkeit des Leerfahrens der Kühlvorrichtung.

Erfindungsgemäß ist es besonders vorteilhaft, dass das Material nach dem Kühlen in einem plastisch noch verformbaren Zustand einem Extruder zugeführt und zu Formkörpern ausextrudiert wird. Die Kühlvorrichtung nach der Erfindung ist ebenso wie ein Extruder eine sehr kompakte Vorrichtung, so dass etwa bei einer Anordnung der Kühlvorrichtung auf oder neben dem Extruder eine insgesamt sehr Platz sparende Fertigungsanlage erreicht werden kann. Der Extruder ermöglicht zusätzlich eine Homogenisierung des Materials und eine Zudosierung von Stoffen, wie Farbpigmenten, Duftstoffen, Gleitmitteln etc.

Nach der Erfindung ist es besonders wirtschaftlich, dass das Material ein Kerzenrohstoff, insbesondere Paraffin, Stearin, Palmöl, Bienenwachs etc. oder ein Gemisch daraus, ist, und der Kerzenrohstoff beim Austritt aus dem Extruder granuliert wird. Das Granulieren kann durch eine Extrusion durch eine Lochplatte erfolgen, an welcher sich ein rotierendes Schneidmesser anschließt. Es können so kugelförmige oder zylinderförmige Granulatkörner mit einer sehr gleichmäßigen Form aus dem Kerzenrohstoff hergestellt werden. Derartige Kerzenrohstoffgranulate sind für die wirtschaftliche Herstellung von Kerzen durch Pressverfahren besonders geeignet.

Ein weiterer Einsatzzweck des erfindungsgemäßen Verfahrens besteht darin, dass das Material in zwei Bestandteile getrennt wird, wobei ein erster Bestandteil an den Kühlwalzen anhaftet, während ein zweiter Bestandteil im fließfähigen Zustand aus dem Aufnahmeraum abgeführt wird. Hierdurch ist eine zweckmäßige Fasentrennung von Materialien oder Stoffen möglich, welche aus Bestandteilen mit unterschiedlichem Schmelz- oder Kristallisationspunkt bestehen.

Die Erfindung wird nachfolgend anhand von bevorzugten Ausführungsbeispielen erläutert, welche schematisch in den Zeichnungen dargestellt sind.

In den Zeichnungen zeigen:
- Fig. 1: eine Vorderansicht auf eine erfindungsgemäße Kühlvorrichtung;
- Fig. 2: eine Seitenansicht auf die Kühlvorrichtung von Fig. 1 und
- Fig. 3: eine schematische Darstellung einer erfindungsgemäßen Extrusionsanlage.

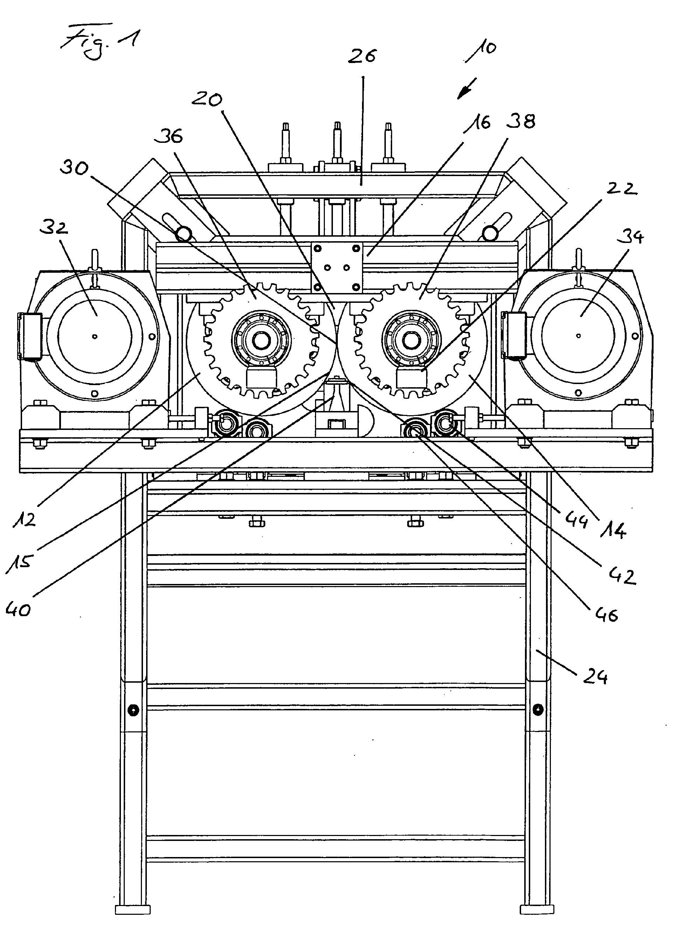

Bei einer erfindungsgemäßen Kühlvorrichtung 10 gemäß Fig. 1 sind zwei Kühlwalzen 12, 14 parallel nebeneinander in einem Gehäuse 26 drehbar gelagert, welches auf einem Grundgestell 24 angeordnet ist. Die horizontal auf gleicher Höhe gelagerten Kühlwalzen 12, 14 sind so angeordnet, dass sich deren jeweiliger Walzenmantel 15 unter Bildung eines definierten Spaltes 30 annähern. Oberhalb des Spaltes 30 ist zwischen den Kühlwalzen 12, 14 ein im Querschnitt etwa dreieckiger Aufnahmeraum 20 gebildet. Über eine Zuführeinrichtung 16 wird ein zu kühlendes Material, beispielsweise ein flüssiger Kerzenrohstoff, direkt in den Aufnahmeraum 20 zwischen die beiden Kühlwalzen 12, 14 mit einem definierten Mengenzufluss kontinuierlich eingeleitet.

Die beiden Kühlwalzen 12, 14 werden über einen jeweils zugeordneten Antrieb 32, 34 über eine Getriebeanordnung drehend angetrieben, von denen in der schematischen Darstellung von Fig. 1 jeweils nur die Ritzel 36, 38 an den Kühlwalzen 12, 14 dargestellt sind. Die linke Kühlwalze 12 wird entgegen dem Uhrzeigersinn angetrieben, während die rechte Kühlwalze 14 im Uhrzeigersinn angetrieben wird. Die Kühlwalzen 12, 14 werden über ein Kühlungssystem gekühlt, von dem in Fig. 1 lediglich eine jeweilige Kühlmittelableitung 22 an den Kühlwalzen 12, 14 vorgesehen ist. Über nicht dargestellte Leitungen wird das Kühlmittel zu einer Kühleinrichtung geführt, von der das Kühlmittel im Kreislauf zurück in die Kühlwalzen geleitet wird.

An den kalten Walzenmänteln 15 der Kühlwalzen 12, 14 kann das zugeführte flüssige Material im Aufnahmeraum 20 zumindest im Nahbereich an dem Walzenmantel 15 erstarren und anlagern. Aufgrund der Drehung der Kühlwalzen 12, 14 wird das angelagerte Material aus dem Aufnahmeraum 20 herausbewegt, so dass neues Material an den nachfolgenden Walzenmantelbereichen erstarren und anlagern kann. Während der weiteren Drehung wird das angelagerte Material weiter gekühlt. In einem unteren Bereich ist eine Abnahmeeinrichtung 40 vorgesehen. Diese umfasst an jeder Kühlwalze 12, 14 zwei Profilierwalzen, nämlich eine vorlaufende Walze 44 und eine nachlaufende Walze 46. Diese können gleichzeitig oder abwechselnd mit dem angelagerten Material an den Kühlwalzen 12, 14 in Eingriff stehen. Die Walzen 44, 46 dienen zum Einbringen von längs- und/oder quergerichteten Schnitten in die angelagerte Materialschicht. Die Materialschicht kann so durch eine zentrale Rakel 42 in definierten Teilstücken von den jeweiligen Walzenmänteln 15 abgestreift werden. Von dieser zentralen Abstreifeinrichtung zwischen den beiden Kühlwalzen 12, 14 fällt das abgerakelte Material senkrecht nach unten zu einer nicht näher erkennbaren Transporteinrichtung zum Abfördern des gekühlten Materiales.

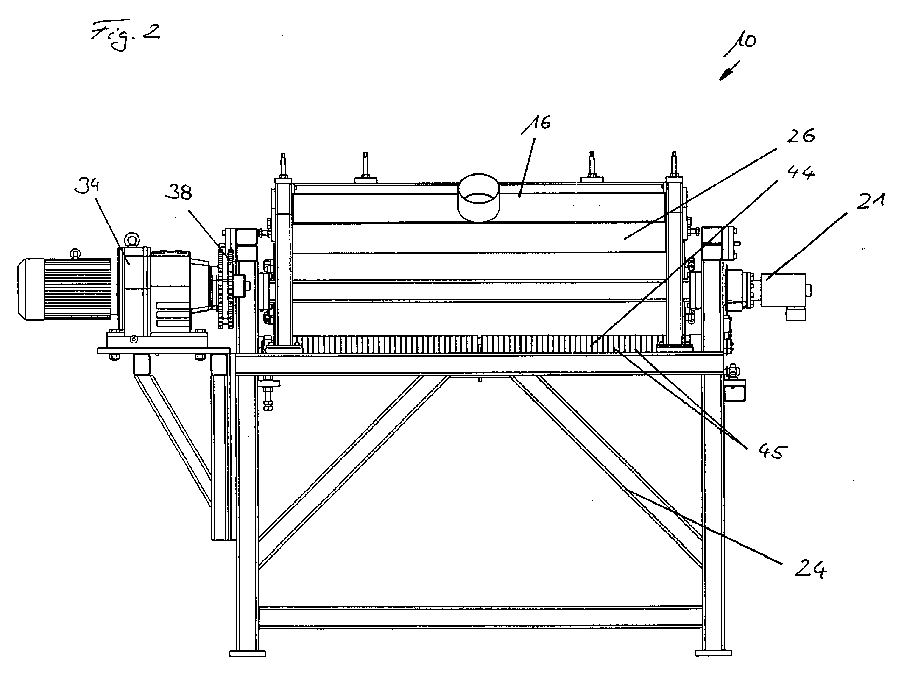

Eine Transporteinrichtung kann unterhalb dem Gehäuse 26 auf dem Grundgestell 24 angeordnet sein, welche das abgenommene, gekühlte Material horizontal abfördert. Die Transporteinrichtung kann insbesondere ein Förderband sein. Fig. 2 sind die vorlaufende Walze 44 mit umlaufenden Schneidkanten 45 und die Kühlmittelzuleitung 21 zu den Kühlwalzen zu entnehmen. Diese umfasst insbesondere eine gesteuert angetriebene Pumpeinrichtung, mit welcher über einen definierten Kühlmittelzufluss eine exakte Temperatur der Kühlwalzen 12, 14 eingestellt werden kann. Weiter ist ein elektrischer Antrieb 34 und das zugehörige Antriebsritzel 38 zu der entsprechenden Getriebeanordnung erkennbar.

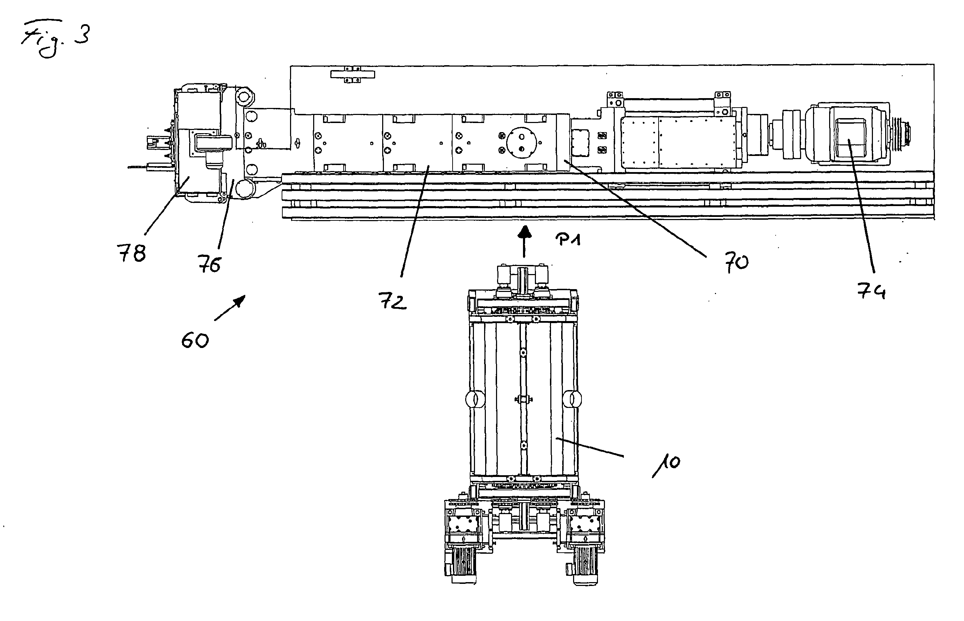

Eine erfindungsgemäße Extrusionsanlage 60 mit der vorausgehend beschriebenen Kühlvorrichtung 10 ist schematisch in Fig. 3 gezeigt. Entsprechend dem Pfeil P1 wird das verfestigte, gekühlte Material, welches bei dem vorliegenden Ausführungsbeispiel ein Kerzenrohstoff ist, von der Kühlvorrichtung 10 zu einem Doppelwellenextruder 70 gefördert. Über eine nicht näher dargestellte Zuführöffnung wird der Kerzenrohstoff über die von einem Extruderantrieb 74 angetriebenen Schneckenwellen in einem Gehäuse 72 vermengt, homogenisiert und unter Druck bei einer definierten Temperatur, welche einen gewünschten plastischen Zustand des Kerzenrohstoffes gewährleistet, zu einem Formwerkzeug 76 am Ausgang des Extruders 70 gepresst. An das Formwerkzeug 76, welches eine Lochplatte mit einer Vielzahl gleichgroßer Extrusionslöcher ist, schließt sich eine Granuliervorrichtung 78 mit einem rotierenden Schneidmesser an. Die Granuliervorrichtung 78 längt die einzelnen Extrusionsstränge aus dem Formwerkzeug 76 zu einer gewünschten Granulatgröße ab. Ein so verarbeiteter und granulierter Kerzenrohstoff kann in besonders wirtschaftlicher Weise für eine spätere Kerzenherstellung in einem Pressverfahren verwendet werden.

## Patentansprüche

1. Kühlvorrichtung mit
- zwei Kühlwalzen (12, 14), welche im Wesentlichen parallel zu einander angeordnet sind,
- einer Zuführeinrichtung (16) zum Aufbringen eines zu kühlenden Materials auf die Kühlwalzen und
- mindestens einer Abnahmeeinrichtung (40) zum Entfernen des gekühlten Materials von den Kühlwalzen (12, 14),
**dadurch gekennzeichnet,**
- **dass** zwischen den zwei Kühlwalzen (12, 14) ein Aufnahmeraum (20) für das zu kühlende fließfähige Material gebildet ist und
- **dass** durch die Zuführeinrichtung (16) das zu kühlende fließfähige Material in den Aufnahmeraum (20) einleitbar ist.

2. Kühlvorrichtung nach Anspruch 1,
**dadurch gekennzeichnet,**
**dass** die zwei Kühlwalzen (12, 14) in entgegengesetzter Richtung antreibbar sind, wobei das zu kühlende Material durch die Kühlwalzen (12, 14) aus dem Aufnahmeraum (20) nach oben abführbar ist.

3. Kühlvorrichtung nach Anspruch 1 oder 2,
**dadurch gekennzeichnet,**
**dass** die Kühlwalzen (12, 14) von einem Kühlmittel durchströmt sind.

4. Kühlvorrichtung nach einem der Ansprüche 1 bis 3,
**dadurch gekennzeichnet,**
**dass** die Abnahmeeinrichtung (40) mittig zwischen den zwei Kühlwalzen (12, 14) unterhalb des Aufnahmeraumes (20) angeordnet ist und das gekühlte Material von beiden Kühlwalzen (12, 14) durch die Abnahmeeinrichtung (40) abnehmbar ist.

5. Kühlvorrichtung nach einem der Ansprüche 1 bis 4,
**dadurch gekennzeichnet,**
**dass** die Abnahmeeinrichtung (40) mindestens eine Rakel (42) aufweist, welche federvorgespannt an mindestens einer Kühlwalze (12, 14) anliegt.

6. Kühlvorrichtung nach einem der Ansprüche 1 bis 5,
**dadurch gekennzeichnet,**
**dass** die Abnahmeeinrichtung (40) mindestens eine profilierte Walze (44, 46) aufweist, welche in das an der Kühlwalze (12, 14) haftende Material einschneidet.

7. Kühlvorrichtung nach einem der Ansprüche 1 bis 6,
**dadurch gekennzeichnet,**
**dass** an dem Aufnahmeraum (20) eine Austrittseinrichtung für einen noch fließfähigen Bestandteil des zu kühlenden Materials vorgesehen ist.

8. Extrusionsanlage mit einem Extruder (70), insbesondere einem Doppelwellenextruder, und einer Kühlvorrichtung (10), welche dem Extruder (70) zum Vorkühlen des zu extrudierenden Materials vorgeschaltet ist,
**dadurch gekennzeichnet,**
**dass** eine Kühlvorrichtung (10) nach einem der Ansprüche 1 bis 7 vorgesehen ist.

9. Verfahren zum Behandeln eines Materials,
**dadurch gekennzeichnet,**
**dass** das Material durch eine Kühlvorrichtung (10) nach einem der Ansprüche 1 bis 8 gekühlt wird.

10. Verfahren nach Anspruch 9,
**dadurch gekennzeichnet,**
**dass** das Material nach dem Kühlen in einem plastisch noch verformbaren Zustand einem Extruder (70) zugeführt und zu Formkörpern ausextrudiert wird.

11. Verfahren nach Anspruch 9 oder 10,
**dadurch gekennzeichnet,**
**dass** das Material ein Kerzenrohstoff, insbesondere Paraffin, Stearin, Palmöl, Bienenwachs etc. oder ein Gemisch daraus, ist, und der Kerzenrohstoff beim Austritt aus dem Extruder (70) granuliert wird.

12. Verfahren nach Anspruch 9,
**dadurch gekennzeichnet,**
**dass** das Material in zwei Bestandteile getrennt wird, wobei ein erster Bestandteil an den Kühlwalzen (12, 14) anhaftet, während ein zweiter Bestandteil in fließfähigem Zustand aus dem Aufnahmeraum (20) abgeführt wird.
